# EUROPÄISCHE PATENTSCHRIFT

(11) **EP 0 956 939 B1**
(45) Veröffentlichungstag und Bekanntmachung des Hinweises auf die Patenterteilung: **31.07.2002**
(21) Anmeldenummer: 99107872.6
(22) Anmeldetag: 21.04.1999
(51) Int. Cl.: B29C 71/02, B29C 49/00

(54) **Grosshohlkörper aus Polyethylen**
Large polyethylene containers
Réceptacles de grandes dimensions en polyéthylène

(30) Priorität: 15.05.1998 DE 19821827
(43) Veröffentlichungstag der Anmeldung: 17.11.1999
(73) Patentinhaber: Basell Polyolefine GmbH, 50389 Wesseling (DE)
(72) Erfinder: Dr.Pfirrmann,Günther, 67069 Ludwigshafen (DE); Dr.Lilge,Dieter, 67117 Limburgerhof (DE); Dr.Hartzmann,Günter, 69181 Leimen (DE); Boes,Dieter, 69168 Wiesloch (DE)

(56) Entgegenhaltungen:
- EP-A- 0 068 714
- EP-A- 0 745 538
- WO-A-98/02368
- CA-A- 2 199 551
- DE-A- 1 704 226
- DE-A- 3 732 898
- DE-U- 9 218 003
- US-A- 3 103 170
- US-A- 3 293 341
- US-A- 4 039 641
- US-A- 4 517 151
- DATABASE WPI Section Ch, Week 8306 Derwent Publications Ltd., London, GB; Class A17, AN 83-13757K XP002111795 & JP 57 212030 A (ASAHI CHEM IND CO LTD), 27. Dezember 1982 (1982-12-27)

## Beschreibung

Die vorliegende Erfindung betrifft Grosshohlkörper, insbesondere Kanister, Tanks, Fässer und Grosspackmittel aus Polyethylen mit einer Dichte ρ ≥ 0,94 g/cm³, einer Schmelze-Fliessrate MFR bei 190°C und 21,6kg < 50 g/10 min, einer Kerbschlagzugzähigkeit a_{zK} gemessen bei einer Temperatur von -30°C nach ISO 8256, von nicht weniger als 300 kJ/m² und einer Bruchfestigkeit, bestimmt durch einen Fallhöhentest bei - 18°C von mehr als 3 m. Sie betrifft weiterhin ein Verfahren zur Herstellung derartiger Grosshohlkörper durch Temperung von vorgefertigten Grosshohlkörpern sowie deren Verwendung zur Lagerung und zum Transport von Gefahrgütern.

Grosshohlkörper aus Polyethylen sind prinzipiell bekannt. Insbesondere Kanister, Tanks, Fässer und Grosspackmittel (Intermediate Bulk Container, IBC) aus Polyethylen finden Verwendung für die Lagerung und den Transport von Flüssigkeiten und Feststoffen aller Art. Besondere Anforderungen werden an Grosshohlkörper für die Lagerung und den Transport von Gefahrgütern, z.B. von hochentzündlichen, ätzenden oder toxischen Flüssigkeiten gestellt. Neben einer guten Chemikalienbeständigkeit müssen derartige Grosshohlkörper auch eine hohe Steifigkeit aufweisen, damit sie z.B. problemlos stapelbar sind. Darüber hinaus müssen sie eine gute Stoss- und Bruchfestigkeit aufweisen, so dass sie auch bei einem Transportunfall, z.B. beim Herabfallen von einer LKW-Ladefläche, nicht undicht werden oder zu Bruch gehen. Grosshohlkörper aus Polyethylen mit guter Steifigkeit und guter Stossund Bruchfestigkeit für die Lagerung und den Transport von Gefahrgütern bestehen üblicherweise aus hochmolekularem PE-HD mit hoher Schlagzähigkeit.

Aus den Eigenschaften des Polyethylens lässt sich allerdings nur in beschränktem Umfange auf die Eigenschaften eines daraus hergestellten Polyethylen-Fertigteils schliessen, da die Bedingungen, unter denen das Polyethylen zum Fertigteil verarbeitet wird, dessen Eigenschaften mehr oder minder stark beeinflussen. So treten z.B. beim Spritzgiessen oder beim Blasformen leicht molekulare Orientierungen und Spannungen auf. Dies ist u.a. dargestellt im "Kunststoffhandbuch, Band IV, Polyolefine, Hrsg.: R. Vieweg, Carl-Hanser-Verlag München 1969, S. 335-337." Daher sind Tests mit dem Fertigteil von grosser Bedeutung. So erfolgt die Prüfung der Bruchfestigkeit von zum Transport von Gefahrgütern zugelassenen Behältern mittels eines sogenannten Falltests. Hierbei werden die Behälter mit einer Prüfflüssigkeit gefüllt und bei -18°C auf eine starre Unterlage fallen gelassen. Nach den Prüfvorschriften müssen sie einen Fall zwischen 0,8 und 2,9 m Höhe -abhängig von Gefährlichkeit und Dichte des Füllguts- ohne Auftreten von Lecks überstehen ("Richtlinien über das Verfahren für die Durchführung der Bauartprüfung und die Zulassung von Verpackungen für die Beförderung gefährlicher Güter, Anhang V " herausgegeben vom Bundesverkehrsministerium am 28.6.1995.). Der Markt erfordert jedoch Behälter mit weiter verbesserten Eigenschaften, um die Transportsicherheit zu erhöhen. Es werden Behälter mit einer Bruchfallhöhe von mehr als 3 m und einer noch höheren Steifigkeit verlangt.

Es ist bekannt, dass die Steifigkeit und die Dichte von Kunststoffen mit zunehmendem Kristallisationsgrad zunehmen, und dass der Kristallisationsgrad durch eine Wärmenachbehandlung verbessert werden kann. Allerdings kann diese Behandlung auch zu einer Versprödung des Formteiles führen (siehe z.B. "Saechtling, Kunststoffhandbuch, S. 93/94, Carl-Hanser-Verlag München,Wien 1995 ").

Die Temperung von Kleinhohlkörpern aus Polyethylen ist prinzipiell bekannt. US-A-3317642 offenbart die Temperung von Polyethylen-Milchflaschen bei 93,3 - 96,1°C. Erreicht wurde ein konstantes Flaschenvolumen, welches sich mit zunehmender Gebrauchsdauer nicht mehr verändert. US-A-3293341 und US-A 3544673 offenbaren die Temperung von Flaschen zur Erhöhung der Steifigkeit. R.S. Schotland et al. (Poly. Prep., Am. Chem. Soc., Div. Pol. Sci. (1968), 9(2), 1219-1226) offenbaren die Temperung von blasgeformten Flaschen aus PE-HD für 4 - 15 min bei 122 - 127°C, wobei die Steifigkeit und die Spannungsrissbeständigkeit (ESCR) verbessert werden konnten und ein stabiles Volumen erreicht wurde. Fleißner (Angew. Makromol. Chem. 105 (1982) 167) offenbart die Erhöhung von Dichte und Zähigkeit von genormten Polyethylen-Probekörpern durch eine Temperung bei 85 - 131°C. DE-U-9218003 und EP-A-0745538 offenbaren Grosshohlkörper aus Polyethylen mit einer Dichte grösser, gleich 0,94 g/cm³ und einer Schmelzfliessrate MFR bei 190°C und 21,6kg < 50 g/10 min, gemäss dem Oberbegriff des Anspruchs 1 und ein Herstellungsverfahren gemäss dem Oberbegriff des Anspruchs 5. EP-A-0745538 offenbart weiter die Verwendung von Grosshohlkörpern zur Lagerung und zum Transport von Gefahrstoffen. US-A-4517151 offenbart ein Blasformverfahren, wobei die Temperatur der Blasform vom Polymer und dessen physikalischen Eigenschaften, wie z.B. DSC Kristallisationstemperatur abhängt.

Keine der genannten Offenbarungen umfasst aber die Verbesserung der Bruchfestigkeit von Grosshohlkörpern, d.h. Hohlkörpern mit einem Volumen von mehr als 5 1. Die kinetische Energie beim Fall von mit Flüssigkeiten oder Feststoffen gefüllten Grosshohlkörpern ist viel grösser als beim Fall von Kleinhohlkörpern, so dass die Anforderungen an Grosshohlkörper deutlich höher sind.

Insbesondere umfasst keine der Offenbarungen Grosshohlkörper aus Polyethylen mit deutlich verbesserter Bruchfestigkeit, die auch einen Fall aus mindestens 3 m unter den Testbedingungen, gemäss den obengenannten Richtlinien des Bundesverkehrsministeriums unbeschadet überstehen, und die zur Lagerung und zum Transport von Gefahrstoffen verwendbar sind. Aufgabe der vorliegenden Erfindung war es daher, derartige Grosshohlkörper zur Verfügung zu stellen.

Diese Aufgabe wird durch die in Anspruch 1 definierten Grosshohlkörper aus Polyethylen gelöst. Weiterhin wurde ein Verfahren zur Herstellung derartiger Grosshohlkörper gemäss dem Anspruch 5 sowie deren Verwendung zur Lagerung und zum Transport von Gefahrstoffen gemäss dem Anspruch 8 gefunden.

Die Grosshohlkörper im Sinne dieser Erfindung haben ein Volumen von 5 - 5000 1, bevorzugt 10 - 1500 l und ganz bevorzugt 30 - 250 l. Bevorzugt handelt es sich bei den Grosshohlkörpern um Kanister, Tanks, Fässer oder Grosspackmittel (IBC). Beispiele für erfindungsgemässe Grosshohlkörper sind Weithalsfässer von 30 - 220 l, Spundfässer und L-Ringfässer von 120 und 220 l, Kanister bis 60 l, Lager-, Transportbehälter und Tanks mit 600 - 5000 l Inhalt. Die Grosshohlkörper bestehen aus Polyethylen. Der Begriff Polyethylen im Sinne dieser Erfindung umfasst sowohl Ethylenhomopolymerisate als auch Ethylencopolymerisate, die neben Ethylen noch Comonomere in geringen Mengen enthalten können. Bevorzugt sollte der Comonomeren-Gehalt 1 mol% der Gesamtmenge eingesetzter Monomere nicht überschreiten. Bevorzugte Comonomere sind 1-Olefine, besonders bevorzugte Comonomere sind 1-Buten, 1-Hexen und 1-Octen. Weiterhin kann es sich bei dem Polyethylen auch um ein Blend aus zwei oder mehreren Polyethylen-Komponenten handeln. Das Polyethylen im Sinne dieser Erfindung kann weiterhin geringe Mengen von üblichen Zusatzstoffen und Hilfsmitteln, wie z.B. Stabilisatoren gegen schädliche Verarbeitungseinflüsse, gegen Wärmeoxidation, Alterung, UV-Einfluss sowie Farbstoffe, organische und anorganische Pigmente, Wachse oder spezielle niedermolekulare Gleit- und Schmiermittel enthalten.
Die Menge an Zusatzstoffen und Hilfsmitteln sollte aber 1 Gew.% bezogen auf die Gesamtmenge des Materials, bevorzugt 0,5 Gew.% nicht überschreiten. Die Dichte des Polyethylens beträgt mindestens 0,94 g/cm³. Ist die Dichte geringer, so wird keine ausreichende Steifigkeit mehr erreicht. Bevorzugt beträgt die Dichte mehr als 0,95 g/cm³. Die Schmelze-Fliessrate MFR bei 190°C und 21,6kg des Polyethylens beträgt 0,5 - 50 g/10 min. Ist die Schmelze-Fliessrate des Polyethylens geringer als 0,5 g/10 min, so weist das Polymer im allgemeinen keine ausreichende Verarbeitbarkeit auf, ist die Schmelze-Fliessrate > 50g/10 min, so wird keine ausreichende Schlagzähigkeit erreicht. Bevorzugt beträgt die Schmelze-Fliessrate MFR bei 190°C und 21,6kg 1 - 30 g/10 min, ganz besonders bevorzugt 1 - 10g/10min. Bevorzugt besitzt das Polyethylen ein Gewichtsmittel der molaren Masse von 200 - 800 kg/mol und eine Uneinheitlichkeit M_{w}/Mₙ von 5 - 80.

Die erfindungsgemässen Grosshohlkörper zeichnen sich durch eine besonders hohe Schlag- und Stossfestigkeit aus. Die Kerbschlagzugzähigkeit a_{zK}, gemessen nach ISO 8256, bei -30°C an aus dem Hohlkörper ausgefrästen Probekörpern beträgt nicht weniger als 300 kJ/m². Ist die Kerbschlagzugzähigkeit geringer, so wird keine ausreichende Schlag- und Stossfestigkeit des Grosshohlkörpers erreicht. Die erfindungsgemässen Grosshohlkörper verfügen des Weiteren über eine besonders hohe Bruchfestigkeit. Die Bruchfestigkeit wird mittels eines sogenannten Falltests bestimmt. Die Prüfvorschrift findet sich in den eingangs zitierten Richtlinien, herausgegeben vom Bundesverkehrsministerium am 28.6.1995. Die Grosshohlkörper werden zur Messung mit einer Prüfflüssigkeit aus Wasser und Ethylenglykol (Dichte 1,1 g/cm³) gefüllt, auf -18°C abgekühlt und auf eine starre, nicht federnde Unterlage fallen gelassen. Sie überstehen einen Fall aus mindestens 3 m Höhe ohne das Auftreten von Lecks.

Die erfindungsgemässen Grosshohlkörper können hergestellt werden, indem man Polyethylen mit einer Dichte ρ ≥ 0,94 g/cm³, einer Schmelze-Fliessrate MFR bei 190°C und 21,6kg < 50 g/10 min und einer Kerbschlagzugzähigkeit a_{zK} (gemessen bei -30°C an einem Probekörper aus PE) von nicht weniger als 250 kJ/m² einsetzt und bei erhöhten Temperaturen zu einem Grosshohlkörper ausformt. Bevorzugt besitzt das eingesetzte Polyethylen ein Gewichtsmittel der molaren Masse von 200 - 800 kg/mol und eine Uneinheitlichkeit M_{w}/Mₙ von 5 - 80.

Zur Ausformung der Grosshohlkörper können an sich bekannte Verfahren wie bspw. Extrusionsblasformen oder kombinierte Verfahren, bei denen bspw. spritzgegossene Deckel auf blasgeformte oder extrudierte Bereiche aufgeschweisst werden, eingesetzt werden. Das Extrusionsblasformen ist die bevorzugte Verfahrensweise zur Ausformung, letzteres ist bspw. ausführlich in "Blow Molding Handbook, Edts. D. V. Rosato, Carl-Hanser-Verlag, München 1989" beschrieben. Form und Grösse der Grosshohlkörper richten sich nach dem jeweiligen Anwendungszweck. Die Dicke der Wandung richtet sich ebenfalls nach dem Anwendungszweck, beträgt aber vorzugsweise nicht mehr als 10 mm, ganz besonders bevorzugt 1-5 mm. Eine besondere Ausführungsform zum Gefahrstofftransport ist das L-Ringfass, das in DE-A-3732898 beschrieben ist. Die Verarbeitungstemperatur richtet sich nach den Anforderungen des gewählten Polymers und des Ausformungsverfahrens. Nach der Ausformung werden die Grosshohlkörper auf Raumtemperatur abgekühlt. Die rohen Grosshohlkörper können in diesem Zustand auch längere Zeit gelagert werden. Sie besitzen bei -18°C eine noch unzureichende Fallhöhe von weniger als 3 m. In einem zweiten Verfahrensschritt werden die Grosshohlkörper bei 60 - 135°C, bevorzugt 80 -120°C getempert. Die Erwärmung des Grosshohlkörpers auf die Temperatur kann auf beliebige Art und Weise erfolgen, wichtig ist nur, dass die Erwärmung gleichmässig erfolgt. Die Temperung kann beispielsweise in einem Umluft-Trockenschrank erfolgen. Im Zuge der Temperung nimmt die Kerbschlagzugzähigkeit a_{zK} gemessen bei einer Temperatur von -30°C nach ISO 8256 deutlich zu. Die Dauer der Temperung richtet sich nach der gewünschten Kerbschlagzugzähigkeit a_{zK} gemessen bei einer Temperatur von -30°C nach ISO 8256. Sie wird erst beendet, wenn das a_{zK}-Niveau mindestens 300 kJ/m² beträgt. Danach wird der Grosshohlkörper wieder auf Raumtemperatur abgekühlt. Überraschenderweise wurde gefunden, dass die Fallhöhe bei -18°C derartig behandelter Grosshohlkörper aus Polyethylen im Zuge dieser Temperbehandlung sehr deutlich, um bis zu einen Faktor von mehr als 3 zunimmt. Die geforderte Mindestfallhöhe bei -18°C von 3 m kann deutlich übertroffen werden. Das Verfahren weist weiterhin den Vorteil auf, dass Qualitätsschwankungen zwischen verschiedenen Grosshohlkörper-Produktionschargen ausgeglichen werden können, und ein relativ gleichmässiges Niveau der Fallhöhe erreicht werden kann.

Die derart hergestellten Grosshohlkörper übertreffen an Stoss- und Bruchfestigkeit die Anforderungen der Gefahrguttransportvorschriften bei weitem und eignen sich daher in hervorragender Weise zur Lagerung und zum Transport von Gefahrstoffen.

Die folgenden Versuchsbeispiele dienen zur weiteren Erläuterung der Erfindung, ohne dass dadurch der Umfang der Erfindung eingeschränkt wird.

Die beschriebenen Eigenschaften wurden in folgender Art und Weise gemessen:
- Dichte:: nach ISO 1183
- Schmelze-Fliessrate: MFR 190/21,6:: nach ISO 1133
- Staudingerinde J_{g}:: nach ISO 1628
- M_{w} und M_{w}/Mₙ: mittels Gel-Permeationschromatographie (GPC)
- Kerbschlagzugzähigkeit a_{z}K:: gemessen bei -30°C nach ISO 8256, Probekörper von 80 x 10 x 4 mm gemäss ISO 1872-2 hergestellt, bei PE-Ausgangsmaterial aus vorhomogenisiertem Griess oder Granulat gepresst und bei den Grosshohlkörpern aus der Wandung herausgefrässt.
Fallhöhe: Bestimmt gemäss den eingangs zitierten Richtlinien, herausgegeben vom Bundesverkehrsministerium am 28.06.1995. Die Fässer wurden zu 98 % mit einem Gemisch aus Wasser und Ethylenglykol gefüllt, auf -18°C abgekühlt und aus unterschiedlichen Höhen gemäß den Vorschriften abgeworfen. Die Dichtigkeit der Fässer nach dem Fall wurde gemäß der Prüfvorschrift durch Anwendung von einem Druck von 0,2 bar geprüft. Die angegebenen Fallhöhen sind die jeweils größten Höhen, aus denen ein Fass ohne Auftreten von Lecks abgeworfen werden konnte.

### Versuch 1:

Aus Polyethylen mit einer Dichte von 0,953 g/cm³, einer Schmelze-Fliessrate MFR 190/21,6 von 2 und einer Kerbschlagzugzähigkeit (a_{zK} - 30°C) von 280 kJ/m² wurde durch Extrusionsblasformen ein 220-l-L-Ringfass ausgeformt (beschrieben in DE-A-3732898) und abgekühlt. Die Fallhöhe (-18°C) dieses Fasses betrug 1,2 m, der ä_{zK}-Wert (-30°C) 296 kJ/m². Weitere Daten sind in der Tabelle angegeben. Das erhaltene L-Ringfass wurde bei 110°C 16 h lang getempert. Der a_{zK}-Wert (-30°C) verbesserte sich auf 341 kJ/m², die Fallhöhe auf 4 m.

### Versuch 2:

Es wurde wie in Versuch 1 vorgegangen, nur enthielt das für die Herstellung der Fässer eingesetzte Polyethylen eine optimierte Phosphit-Stabilisierung wie in EP-B 600 368 beschrieben. Der Fallhöhentest ergab eine Fallhöhe von 4,5 m.

### Versuch 3:

Es wurde wie in Versuch 1 vorgegangen, nur wurde ein Polyethylen mit einer Schlagzugzähigkeit a_{zK} (-30°C) von 250 kJ/m² eingesetzt. Der Fallhöhentest (-18°C) ergab eine Fallhöhe von 5,9 m.

In Tabelle 1 sind die erhaltenen Messdaten zusammengefasst. Sie zeigt die besonders guten Fallhöhen und die besonders gute Schlagzugzähigkeit der erfindungsgemässen Grosshohlkörper.

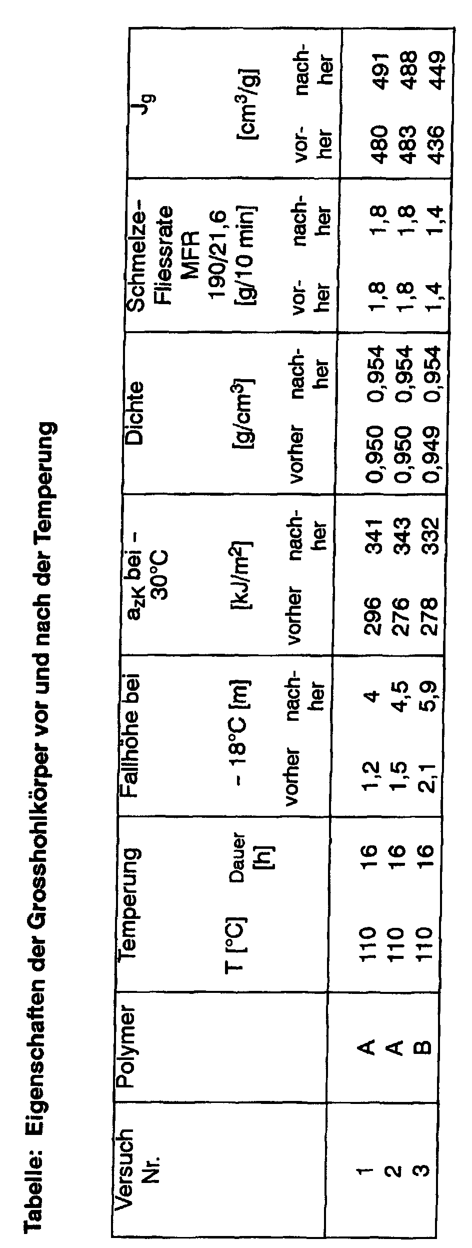

## Patentansprüche

1. Grosshohlkörper aus Polyethylen mit einem Volumen von 5 - 5000 l mit einer Dichte ρ ≥ 0,94 g/cm³ und einer Schmelze-Fliessrate MFR bei 190°C und 21,6 kg kleiner als 50 g/10 min des zum Grosshohlkörper geformten Polyethylens, **dadurch gekennzeichnet, dass** die Kerbschlagzugzähigkeit a_{zK} gemessen bei einer Temperatur von -30°C nach ISO 8256, nicht weniger als 300 kJ/m², und dass die Bruchfestigkeit, bestimmt durch Fallhöhentest gemäß den Richtlinien über das Verfahren für die Durchführung der Bauartprüfung und die Zulassung von Verpackungen für die Beförderung gefährlicher Güter, Anhang V des Bundesverkehrsministeriums von 28.06.1995 bei -18°C, mehr als 3 m beträgt.

2. Grosshohlkörper gemäss Anspruch 1, **dadurch gekennzeichnet, dass** das Polyethylen ein Gewichtsmittel der molaren Masse M_{w} von 200 - 800 kg/mol, und eine Breite der Molmassenverteilung M_{w}/Mₙ von 5 - 80 aufweist.

3. Grosshohlkörper gemäß Anspruch 1 oder 2, **dadurch gekennzeichnet, dass** es sich um einen Kanister, einen Tank, ein Fass oder ein Grosspackmittel handelt.

4. Grosshohlkörper gemäss Anspruch 3, **dadurch gekennzeichnet, dass** es sich um ein L- Ringfass handelt.

5. Verfahren zur Herstellung von Grosshohlkörpern mit einem Volumen von 5 - 5000 l, indem man Polyethylen mit einer Dichte ρ ≥ 0,94 g/cm³, einer Schmelze-Fliessrate MFR bei 190°C und 21,6 kg kleiner als 50 g/10 min und einer Kerbschlagzugzähigkeit a_{zK} gemessen bei einer Temperatur von -30°C nach ISO 8256 von nicht weniger als 250 kJ/m² einsetzt, bei erhöhten Temperaturen zu einem Grosshohlkörper ausformt und den Grosshohlkörper auf Raumtemperatur abkühlen lässt, **dadurch gekennzeichnet, dass** man den Grosshohlkörper in einem weiteren Verfahrensschritt bei 60 - 135°C tempert bis die Kerbschlagzugzähigkeit a_{zK} des zum Grosshohlkörper geformten Polyethylens gemessen bei einer Temperatur von -30°C nach ISO 8256 mindestens 300 kJ/m² beträgt und wieder auf Raumtemperatur abkühlen lässt.

6. Verfahren gemäss Anspruch 5,**dadurch gekennzeichnet, dass** das eingesetzte Polyethylen ein Gewichtsmittel der molaren Masse M_{w} von 200 - 800 kg/mol und eine Breite der Molmassenverteilung M_{w}/Mₙ von 5 - 80 aufweist.

7. Verfahren gemäss den Ansprüchen 5 oder 6, **dadurch gekennzeichnet, dass** man die Ausformung der Grosshohlkörper mittels Extrusionsblasformen durchführt.

8. Verwendung der Grosshohlkörper gemäss Ansprüchen 1 bis 4 zur Lagerung und zum Transport von Gefahrstoffen.

## Claims

1. A large blow molding made from polyethylene with volume of from 5 to 5,000 l and with density ρ ≥ 0.94 g/cm³ and melt flow rate MFR at 190°C and 21.6 kg of less than 50 g/10 min, wherein the notched tensile impact strength a_{zK}, measured at -30°C for the polyethylene molded to give the large blow molding, and in accordance with ISO 8256, is not less than 300 kJ/m² and the bursting strength, determined by a drop height test according to the Richtlinien über das Verfahren für die Durchführung der Bauartprüfung und die Zulassung von Verpackungen für die Beförderung gefährlicher Güter, Appendix V issued by the German Transport Ministry on June 28, 1995, at -18°C is more than 3 m.

2. A large blow molding as claimed in claim 1, wherein the polyethylene has a weight-average molar mass M_{w} of from 200 to 800 kg/mol and a breadth of molar mass distribution M_{w}/Mₙ of from 5 to 80.

3. A large blow molding as claimed in claim 1 or 2, which is a canister, tank, drum or intermediate bulk container.

4. A large blow molding as claimed in claim 3 which is an L-ring drum.

5. A process for producing large blow moldings with volume of from 5 to 5,000 l, by using polyethylene of density ρ ≥ 0.94 g/cm³, melt flow rate MFR at 190°C and 21.6 kg of less than 50 g/10 min and notched tensile impact strength a_{zK}, measured at -30°C and in accordance with ISO 8256, not less than 250 kJ/m², forming the same at high temperatures to give a large blow molding, and allowing the large blow molding to cool to room temperature, which comprises, in a further step, annealing the large blow molding at from 60 to 135°C until the notched tensile impact strength a_{zK} for the polyethylene molded to give the large blow molding, measured at -30°C and in accordance with ISO 8256, is at least 300 kJ/m², and then cooling the same again to room temperature.

6. A process as claimed in claim 5, wherein the polyethylene used has a weight-average molar mass M_{w} of from 200 to 800 kg/mol and a breadth of molar mass distribution M_{w}/Mₙ of from 5 to 80.

7. A process as claimed in claim 5 or 6, wherein the large blow molding is formed by extrusion blow molding.

8. The use of the large blow moldings as claimed in any of claims 1 to 4 for storage or transport of hazardous materials.

## Revendications

1. Réceptacles de grandes dimensions en polyéthylène ayant un volume de 5 - 5000 l avec une masse volumique ρ 0,94 g/cm³ et un taux de fluage de masse fondue MFR à 190°C et 21,6 kg inférieur à 50 g/10 min du polyéthylène mis en forme de réceptacle de grandes dimensions, **caractérisés par le fait que** l'indice de résilience a_{zK} mesuré à une température de -30°C selon ISO 8256, n'est pas inférieur à 300 kJ/m², et que la résistance à la rupture, mesurée par le test de hauteur de chute selon les directives sur le procédé pour la réalisation de l'examen d'une forme d'exécution et l'autorisation des emballages pour le transport des produits dangereux, annexe V du ministère fédéral des transports du 28.06.1995 à -18°C, est de plus de 3 m.

2. Réceptacles de grandes dimensions selon la revendication 1, **caractérisé par le fait que** le polyéthylène présente une moyenne pondérale de la masse molaire M_{w} de 200 - 800 kg/mol, et que la largeur de la distribution de masses molaires M_{w}/Mₙ est de 5 - 80.

3. Réceptacles de grandes dimensions selon la revendication 1, **caractérisé par le fait qu'**il s'agit d'une bidon, un réservoir, un fût ou un grand emballage.

4. Réceptacles de grandes dimensions selon la revendication 3, **caractérisé par le fait qu'**il s'agit d'un fût à cerclage en L.

5. Procédé pour la préparation de réceptacles de grandes dimensions ayant un volume de 5 - 5000 1, dans lequel on utilise du polyéthylène ayant une masse volumique ρ 0,94 g/cm³, un taux de fluage de masse fondue MFR à 190°C et 21,6 kg inférieur à 50 g/10 min et un indice de résilience a_{zK} mesuré à une température de -30°C selon ISO 8256 d'au moins 250 kJ/m², on met en forme à des températures élevées pour former un réceptacle de grandes dimensions et on laisse refroidir le réceptacle de grandes dimensions à température ambiante, **caractérisé par le fait qu'**on recuit à 60 - 135°C le réceptacle de grandes dimensions dans une étape opératoire ultérieure jusqu'à ce que l'indice de résilience a_{zK} du polyéthylène mis sous la forme du réceptacle de grandes dimensions, mesuré à une température de -30°C selon ISO 8256 soit d'au moins 300 kJ/m², et on laisse à nouveau refroidir à température ambiante.

6. Procédé selon la revendication 5, **caractérisé par le fait que** le polyéthylène utilisé présente une moyenne pondérale de la masse molaire M_{w} de 200 - 800 kg/mol, et une largeur de la distribution de masses molaires M_{w}/Mₙ de 5 - 80.

7. Procédé selon les revendications 5 ou 6, **caractérisé par le fait qu'**on effectue la mise en forme des réceptacles de grandes dimensions au moyen de filières d'extrusion-soufflage.

8. Utilisation des réceptacles de grandes dimensions selon les revendications 1 à 4 pour le stockage et le transport de substances dangereuses.
